# EUROPÄISCHE PATENTSCHRIFT

(11) **EP 0 534 083 B1**
(45) Veröffentlichungstag und Bekanntmachung des Hinweises auf die Patenterteilung: **20.11.1996**
(21) Anmeldenummer: 92112617.3
(22) Anmeldetag: 23.07.1992
(51) Int. Cl.: G02F 1/19, G02F 1/01, G01J 5/06

(54) **Optischer Leistungsbegrenzer mit intensitätsabhängigem Reflexionsvermögen**
Intensity limiter with intensity dependant reflectivity
Limiteur de puissance optique dont le facteur de reflexion depend de l'intensité

(30) Priorität: 06.08.1991 DE 4125952
(43) Veröffentlichungstag der Anmeldung: 31.03.1993
(73) Patentinhaber: DORNIER GMBH, D-88004 Friedrichshafen (DE)
(72) Erfinder: Lautenschlager, Peter, Dr., W-7778 Markdorf (DE); Scherber, Werner, Dr., W-7775 Bermatingen (DE)
(74) Vertreter: Landsmann, Ralf, Dipl.-Ing.

(56) Entgegenhaltungen:
- EP-A- 0 021 336
- EP-A- 0 459 574
- US-A- 3 455 627
- PATENT ABSTRACTS OF JAPAN vol. 9, no. 276 (P-402)2. November 1985 & JPA 60120332
- PROCEEDINGS OF THE SPIE: OPTICAL INFROMATION PROCESSING SYSTEMS AND ARCHITECTURES Bd. 1151, 8. August 1989, SAN DIEGO, CA, USA Seiten 522 - 532 E.M.YEATMAN, M.E.CALDWELL: 'Surface plasmon spatial light modulators'
- PHYSICAL REVIEW B Bd. 16, Nr. 4, 1977, Seiten 1297 - 1311 G.J.KOVACS, G.D. SCOTT: 'Optical excitation of surface plasma waves in layered media'

## Beschreibung

Die Erfindung betrifft einen optischen Leistungsbegrenzer nach dem Oberbegriff des Anspruch 1.

CO₂ - Laser mit mittleren, heute gängigen Leistungsstärken sind in der Lage, IR-Detektoren, z. B. in Wärmebildgeräten zu blenden oder zu zerstören. Ein Schutz ist mit herkömmlichen Filtem nicht oder nur mit erheblicher Empfindlichkeitseinbuße möglich, da die Betriebsfrequenzen des CO₂ - Lasers im Maximum der Umgebungsstrahlung liegen.

Eine Gegenmaßnahme könnte im Einsatz sehr schmalbandiger selektiver Filter bestehen, welche die Laserstrahlung wirksam abhalten, ohne die Empfindlichkeit des Wärmebildgeräts zu beeinträchtigen. Die Methode erscheint praktikabel, solange die Bedrohung sich auf einige diskrete Frequenzen beschränkt, würde jedoch bei durchstimmbaren Lasern, also solchen, deren Frequenz innerhalb gewisser Grenzen verändert werden kann, versagen.

Eine universelle Lösungsmöglichkeit liegt in der Verwendung eines Filters oder einer Blende mit intensitätsabhängiger Durchlässigkeit, also eines optischen Leistungsbegrenzers. Vorrichtungen, welche einen äußeren Regelmechanismus einsetzen, scheiden jedoch wegen der langen Totzeiten zumindest als Primärschutz aus.

Aus der DE 36 05 635 A1 ist ein Leistungsbegrenzer für Laserlicht ohne äußeren Regelmechanismus bekannt, dessen Durchlässigkeit mit steigender Intensität der zu begrenzenden Strahlung stark abfällt. Er umfaßt eine Durchbruchsstrecke aus einem gasförmigen, flüssigen oder festen Material. Die Leistungsbegrenzung beruht auf dem physikalischen Prinzip, daß mit steigender Intensität der einfallenden Strahlung durch Multiphononenabsorption und Kaskadenionisation ein Plasma entsteht, welches die Laserstrahlung abschirmt. Nachteilig an dieser Vorrichtung ist, daß der apparative Aufwand relativ hoch ist. So sind z.B. im Falle von flüssigen oder gasförmigen Materialien für die Durchbruchsstrecke entsprechende Behältnisse notwendig. Da der Durchbruch-Schwellenwert vom Druck innerhalb der Materialien abhängt, ist darüberhinaus eine ständige Druckregelung notwendig, wobei ein ungewollter Druckverlust eine Fehlfunktion nach sich ziehen kann.

In Processing of the SPIE : Optical Information Processing Systems and Architectures, Bd. 1151, 8. August 1989, San Diego, USA, Seiten 522 bis 532, E.M. Yeatman, M.E. Caldwell: Surface plasmon spatial light modulators werden verschiedene Vorrichtungen beschrieben, bei denen ein Lichtstrahl unter Ausnutzung von Oberflächenplasmonen-Resonanzen moduliert wird. In einer Ausführung wird auf der Basisfläche eines Prismas eine dünne metallische Schicht mit einer negativen Dielektrizitätskonstante und darauf eine nichtleitende dielektrische Schicht aufgebracht. Es werden verschiedene Möglichkeiten zur Steuerung der Dielektrizitätskonstanten der dielektrischen Schicht angegeben, um den einfallenden Lichtstrahl zu modulieren, z.B. durch Einsatz eines elektro-optischen Materials als dielektrische Schicht, die mit einer Spannung beaufschlagt wird.

Die EP 21 336 A1 beschreibt ein optisches Abbildungsgerät. Es umfaßt ein Prisma, wobei die einfallende Strahlung in das Prisma und auf dessen Basis geleitet wird. Auf der Basis ist eine Schicht angebracht ist, deren Dielektrizitätskonstante in dem betrachteten Wellenlängenbereich negativ ist. Im Kontakt mit dieser ersten Schicht steht ein Medium, dessen Brechungsindex veränderbar ist. Durch verschiedene Regelmechanismen, z.B. elektrochemischer, photochromer oder elektrochromer Natur, kann der Brechungsindex des Mediums und somit der Reflektionsgrad an der Basis des Prismas verändert werden.

In Applied Optics, Vol. 13, No.1, Jan 74, Seiten 17 bis 19 ist ein Strahlabschwächer beschrieben, bei dem zwischen zwei Prismen eine Schicht angeordnet ist, deren Brechungsindex kleiner als der des Prismenmaterials ist. Durch Veränderung der Schichtdicke kann der Transmissionsgrad der Anordnung verändert werden.

Die US 38 34 793 beschreibt einen dichromen Spiegel aus einem Substrat mit möglichst hoher Reflektivität, auf das mehrere Schichten aufgebracht sind. Mindestens eine davon ist VO₂. Einfallendes weißes Licht durchläuft die einzelnen Schichten, wobei es an den Grenzflächen teilweise und am Substrat gänzlich reflektiert wird. Durch Interferenz des an unterschiedlichen Grenzflächen reflektierten Lichts werden bestimmte Wellenlängen verstärkt oder ausgelöscht. Durch Heizen der VO₂-Schicht und dadurch erfolgender Änderung des Brechungsindex kann die Farbe des reflektierten Lichts verändert werden.

In der US 4 795 240 ist ein Infrarot-Verschluß mit einer dünnen Schicht aus einem thermochromen Material beschrieben, dessen Durchlässigkeit mit steigender Temperatur stark abfällt. Durch einen äußeren Regelmechanismus kann die Durchlässigkeit der Schicht gesteuert werden. Dazu wird ein elektrischer Strom definierter Stärke durch eine der thermochromen Schicht benachbarten Schicht geleitet. Die entstehende Widerstandswärme wird zur Temperaturregelung der thermochromen Schicht verwendet.

Die US 4 615 587 offenbart einen thermooptischen Dünnfilm-Modulator, mit dem Bildinformationen in eine dünne thermooptische Schicht, deren Durchlässigkeit mit steigender Temperatur stark abfällt, eingeprägt und wieder gelöscht werden kann. Dafür ist eine möglichst schnelle Temperaturregelung der thermooptischen Schicht notwendig. Dies wird erreicht, indem zur Widerstandsheizung ein elektrischer Strom durch eine der thermooptischen Schicht benachbarten Metallschicht geleitet wird und gleichzeitig ein Teil der entstehenden Wärme durch eine Kühlflüssigkeit abgeführt wird. Durch Unterbrechung des Stroms kann das Gleichgewicht von Wärmeproduktion und Wärmeverlust verändert werden und dadurch die Temperatur der thermooptischen Schicht sehr schnell verändert werden.

Die der Erfindung zugrundeliegende Aufgabe ist es, eine optischen Leistungsbegrenzer für eine Strahlung zu schaffen, der mit geringem apparativem Aufwand eine sichere Funktion ermöglicht.

Diese Aufgabe wird erfindungsgemäß gelöst durch einen optischen Leistungsbegrenzer mit den kennzeichnenden Merkmalen des Anspruch 1. Ausgestaltungen der Erfindung sind Gegenstände von Unteransprüchen.

Der erfindungsgemäße Leistungsbegrenzer weist innerhalb einen Wellenlängenbereich von 1 bis 20 µm eine von der Intensität der einfallenden Strahlung abhängige Durchlässigkeit auf. Er umfaßt ein Prisma mit mindestens einer ebenen Grenzfläche. Auf dieser sind zwei übereinanderliegende Schichten aufgebracht, wobei eine Schicht (aktive Schicht) aus einem Material besteht, dessen Realteil der dielektrischen Funktion im interessierenden Frequenzintervall negativ ist, und die andere Schicht (Dispersionsschicht) aus einem Material besteht, dessen Brechungsindex im interessierenden Frequenzintervall stark temperaturabhängig ist. Die zu begrenzende Strahlung wird in das Prisma und auf die ebene Grenzfläche, die mit den oben angegebenen Schichten versehen ist geleitet. Unter einem Prisma ist hier allgemein ein Körper aus einem lichtdurchlässigem und lichtbrechendem Stoff zu verstehen, der von mindestens zwei sich schneidenden Ebenen begrenzt ist. Der Brechungsindex des Prismenmaterials muß größer sein als der des umgebenden Mediums, im allgemeinen Luft, sein.

Grundlage der Erfindung ist die Ausnutzung der Resonanzeigenschaften von Oberflächenplasmonen, die sich an der Oberfläche der aktiven Schicht ausbreiten. Durch Änderung der Plasmonenresonanzeigenschaften wird eine Änderung des Reflexionsvermögens bei der Reflexion der einfallenden Strahlung an der ebenen Grenzfläche des Prismas bewirkt. Diese Änderung des Reflexionsvermögens wird zur Leistungsbegrenzung ausgenützt.

Die Resonanzeigenschaften der Oberflächenplasmonen werden durch die optischen Eigenschaften der benachbarten Dispersionsschicht, insbesondere deren Brechungsindex, wesentlich beeinflußt.
Durch Änderung des Brechungsindex der Dispersionsschicht kann somit eine Änderung des Reflexionsvermögens erreicht werden. Diese Brechungsindexänderung wird in der vorliegenden Erfindung durch Erwärmung bewirkt - die Dispersionsschicht besteht aus einem Material, dessen Brechungsindex stark temperaturabhängig ist (thermorefraktives Material).
Entscheidend ist, daß die notwendige Erwärmung nicht durch einen äußeren Regelmechanismus gesteuert wird, sondern direkt von der, zu begrenzenden Strahlung bewirkt wird. Dabei wird die Tatsache ausgenutzt, daß beim Einfall hoher Strahlungsintensitäten sich die Vorrichtung aufgrund der immer vorhandenen Restabsorption der beteiligten Materialien erwärmt.
Bei geringen Lichtintensitäten wird das in das Prisma einfallende Licht fast vollständig reflektiert. Bei hohen Intensitäten setzt die Absorption durch die Erzeugung von Oberflächenplasmonen ein und die die reflektierte Lichtintensität wird sehr stark abgeschwächt.

Die Dispersionsschicht ist mikroskopisch dünn, im nm/µm-Bereich, so daß deren Erwärmung und die angestrebte Änderung des Reflexionsvermögens sehr schnell geschehen kann.

Die hier skizzierten physikalischen Zusammenhänge und die daraus folgenden Ausbildungen der Erfindung werden anhand von Figuren näher erläutert.
Es zeigen:
- Fig. 1: eine optische Ablenkeinheit, mit der Oberflächenplasmonen nach der Methode der abgeschwächten Totalreflexion (ATR) erzeugt werden sowie eine graphische Darstellung des Reflexionsvermögens dieser Ablenkeinheit in Abhängigkeit vom Einfallswinkel (ATR-Spektrum)
- Fig. 2: zwei Ausbildungen der erfindungsgemäßen Vorrichtung
- Fig. 3: das ATR-Spektrum einer optischen Ablenkeinheit nach Fig. 1 für drei unterschiedliche Materialien der aktiven Schicht
- Fig. 4: die graphische Darstellung des Reflexionsvermögens in Abhängigkeit vom Einfallswinkel einer erfindungsgemäßen Vorrichtung
- Fig. 5: die Verwendung zweier erfindungsgemäßer Vorrichtungen nach Fig. 4 zum Schutz eines Wärmebildgeräts gegen den Einfall hoher Strahlungsintensitäten.

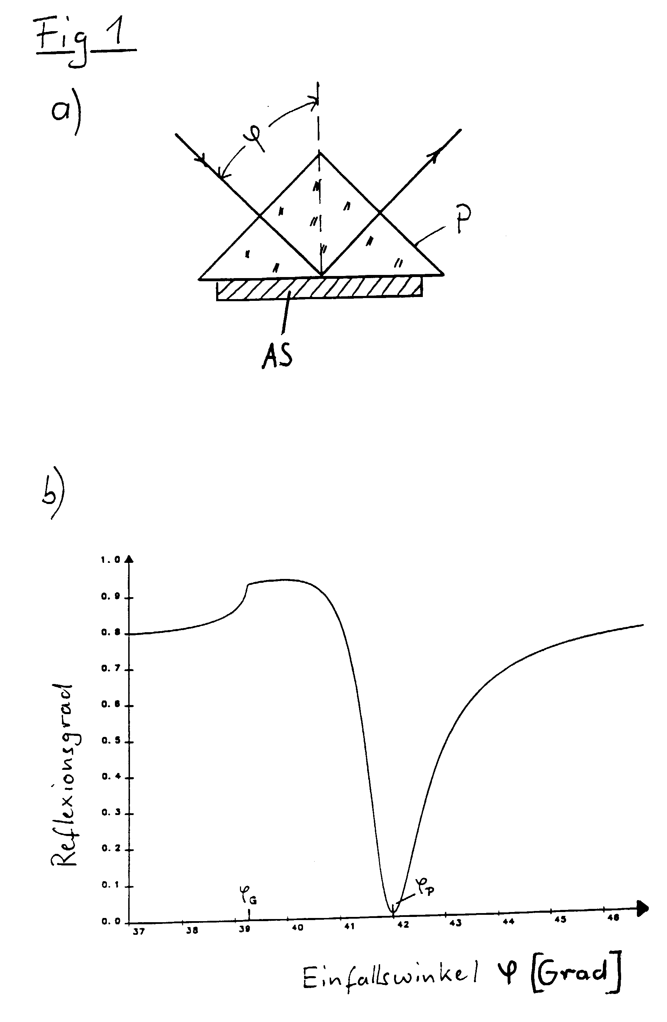

Oberflächenplasmonen (SPP, surface plasmon polariton) sind eine spezielle Form einer elektromagnetischen Schwingung, welche an der Grenzfläche zwischen einem Dielektrikum und einem Metall auftreten kann. Da eine einfalende Strahlung an Oberflächen nicht direkt in die SPP-Mode einkoppeln kann, sind besondere Anordnungen erforderlich, wie z. B. die in Fig. 1a schematisch dargestellte Anordnung nach der Methode der "abgeschwächten Totalreflexion" (ATR).

Fig. 1a zeigt ein Prisma P, auf dessen Basisfläche eine dünne Metallschicht AS (im Bereich von µm) aufgebracht ist. Die Dicke der Metallschicht AS ist gegenüber der Höhe des Prisma P übertrieben dick gezeichnet. Eingezeichnet ist ein einfallender Strahl, der an der Basisfläche des Prismas P abgelenkt wird. Der Winkel ϕ bezeichnet den Einfallswinkel des Lichtstrahls.

Der berechnete Reflexionsgrad als Funktion des Einfallswinkels ϕ ist in Fig. 1b aufgetragen. Er kann kann Werte zwischen 0 und 1 annehmen, wobei bei einem Wert von 1 sämtliche einfallende Strahlung reflektiert wird.

Er zeigt bei kleinen Winkeln zunächst den gewohnten Anstieg bis zum Winkel der Totalreflexion ϕ_{g}, bei dem das einfallende Licht annähernd vollständig reflektiert wird. Durch die Anregung der SPP - Mode (Erzeugung von Oberflächenplasmonen) kommt es bei einem Winkel ϕₚ > ϕ_{g} zu einer fast vollständigen Absorption. Bemerkenswert ist der sehrsteile Anstieg von der Totalreflexion zur Totalabsorption über einen engen Winkelbereich.

Voraussetzung für die Anregung der SPP-Mode ist, daß das Licht p-polarisiert ist, der elektrische Feldvektor also parallel zur Einfallsebene schwingt.

Die SPP-Schwingung ist an der äußeren Grenzfläche der für die Oberflächenplasmonen aktiven Metallschicht lokalisiert. Grundlegend für die Erfindung ist die Erkenntnis, daß mit einer weiteren Schicht (Dispersionsschicht), welche an diese Grenzfläche anschließt, sich das Resonanzverhalten, insbesondere der Winkel ϕₚ, empfindlich beeinflussen läßt, weil die Existenz und das Ausbreitungsverhalten der SPP-Schwingung stark von den optischen Konstanten, z. B. der Dielektrizitätskonstanten ε, dieser Schicht abhängt.

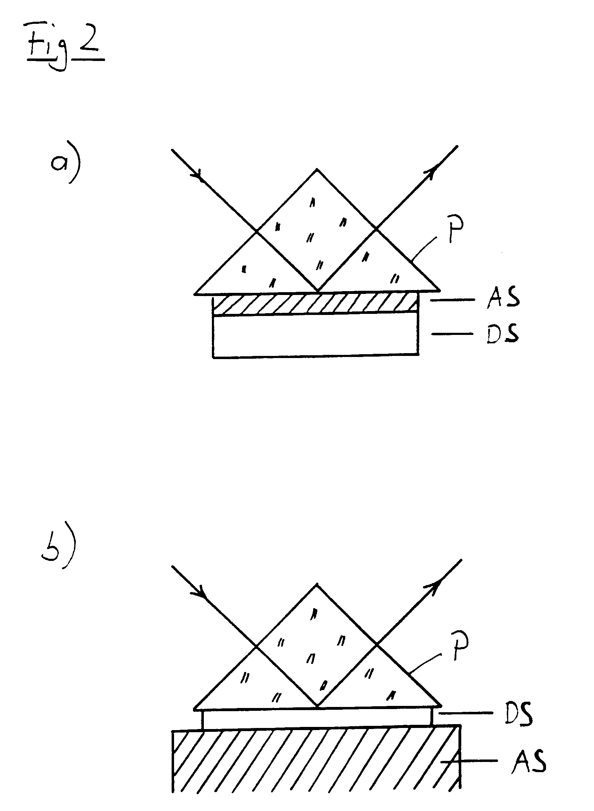

Fig. 2 zeigt zwei mögliche Ausbildungen der erfindungsgemäßen Vorrichtung. In Fig. 2a ist die aktive Schicht AS direkt aufdem Einkoppelprisma P aufgebracht. Darauf ist die Dispersionsschicht DS aufgebracht. Beide Schichten AS,DS sind mikroskopisch dünn. Ihre Schichtdicken liegen im Bereich von nm/µm. Bevorzugt liegt die Dicke der aktiven Schicht AS im Bereich von 500 - 1500 nm, die Dicke der Dispersionsschicht DS im Bereich von 50 - 2000 nm.

In Fig. 2b ist die Dispersionsschicht DS direkt aufdem Einkoppelprisma aufgebracht. Darauf ist die aktive Schicht aufgebracht. Die Dispersionsschicht DS ist mikroskopisch dünn (im Bereich von nm/µm), die Dicke der aktiven Schicht AS dagegen kann beliebig, insbesondere makroskopisch dick sein (im Bereich von cm). Bevorzugt liegt die Dicke der Dispersionsschicht DS zwischen 1000 - 2000 nm.

Die Schichtdicke der mikroskopisch dünnen Schichten ist ist gegenüber den Abmessungen des Prismas P nicht maßstabsgerecht gezeichnet. In beiden Fällen besteht die aktive Schicht AS aus einem Material, dessen Realteil der dielektrischen Funktion in einem betrachteten Wellenlängenbereich negativ ist, während die Dispersionsschicht DS aus einem thermorefraktiven Material besteht, dessen Brechungsindex stark temperaturabhängig ist.

Da die Wirkungsweise der erfindungsgemäßen Vorrichtung auf der Aufheizung der Dispersionsschicht DS aus thermorefraktivem Material durch die einfallende Strahlung beruht, ist die Ausführung in Fig. 2a besonders geeignet, da diese aufgrund der dünnen Schichten eine geringe Wärmekapazität und somit eine sehr kurze Ansprechzeiten besitzt.

Bei sehr hohen eingestrahlten Leistungen wird die Vorrichtung stark aufgeheizt, was zu irreversibelen Veränderungen führen kann. Deshalb sind besonders temperaturfeste Materialien einzusetzen. Vorteilhaft kann jedoch auch ein irreversibel arbeitender, einmalig verwendbarer Leistungsbegrenzer, sinnvoll eingesetzt werden.

Auch kann die Absorption des Prismas P als sekundäre (zeitlich versetzte) Schutzfunktion mit einbezogen werden. Hierfür werden Prismenmaterialien verwendet, deren Absorptionsvermögen durch die Erwärmung sich stark erhöht. Die Ansprechzeit dieser zusätzlichen Schutzfunktion ist höher, da im Gegensatz zur Erwärmung der mikroskopisch dünnen Dispersionschicht DS der massive Prismenkörper erwärmt werden muß.

Die Ausführung in Fig. 2b bietet durch die massive aktive Schicht günstige Voraussetzungen, um hohe Strahlungsleistungen durch aktive Kühlung wirksam abzuführen.

Abhängig vom Wellenlängenbereich, in dem die erfindungsgemäße Ablenkeinrichtung verwendet werden soll, sind die Materialien für die aktive Schicht und die Dispersionsschicht zu wählen. Der hier interessierende Wellenlängenbereich ist der Bereich zwischen etwa 1 und 20 µm Wellenlänge. In diesen Bereich fallen z. B. die atmosphärischen Fenster (ca. 3-5 µm) und (ca. 8-12 µm) sowie die Wellenlänge des CO₂ - Lasers (10,6 µm). Leistungsbegrenzer, die für diesen Wellenlängenbereich ausgelegt sind, können vor allem zum Schutz von IR-Detektoren, z. B. in Wärmebildgeräten gegen den Einfall hoher Strahlungsintensitäten verwendet werden.

Für die aktive Schicht kommen Materialien zur Anwendung, deren Realteil Re ε der dielektrischen Funktion im interessierenden Wellenlängenbereich, hier also zwischen 1 und 20 µm, negativ ist. Grundsätzlich erfüllen alle Metalle aufgrund ihrer hohen Konzentration an freien Ladungsträgern diese Bedingung. Die Berechnung des ATR-Spektrums (vgl. Abb 1) zeigt jedoch, daß aufgrund der großen Werte des Absolutbetrags |Re ε| für diese Metalle der Winkelbereich, in dem das Oberflächenplasmon angeregt wird, kleiner als ein Zehntel Grad beträgt. Vorteilhaft werden deshalb solche Materialien verwendet, deren Realteil der dielektrischen Funktion im interessierenden Wellenlängenbereich negativ, jedoch zusätzlich größer als -100, besonders vorteilhaft größer als - 10 ist.

Dies kann erreicht werden, indem die Zahl der freien Ladungsträger reduziert wird, indem z. B. Metallpartikel in ein Dielektrikum eingelagert werden, sogenannte Cermet-Materialien z.B. Cu in KBr oder in Ge oder hochdotierte Halbleitermaterialien verwendet werden, bei denen die Plasmafrequenz der freien Ladungsträger nahe der CO₂-Laserwellenlänge liegt, z.B. Si, Ge, In₂O₃ : SnO₂ (= ITO).

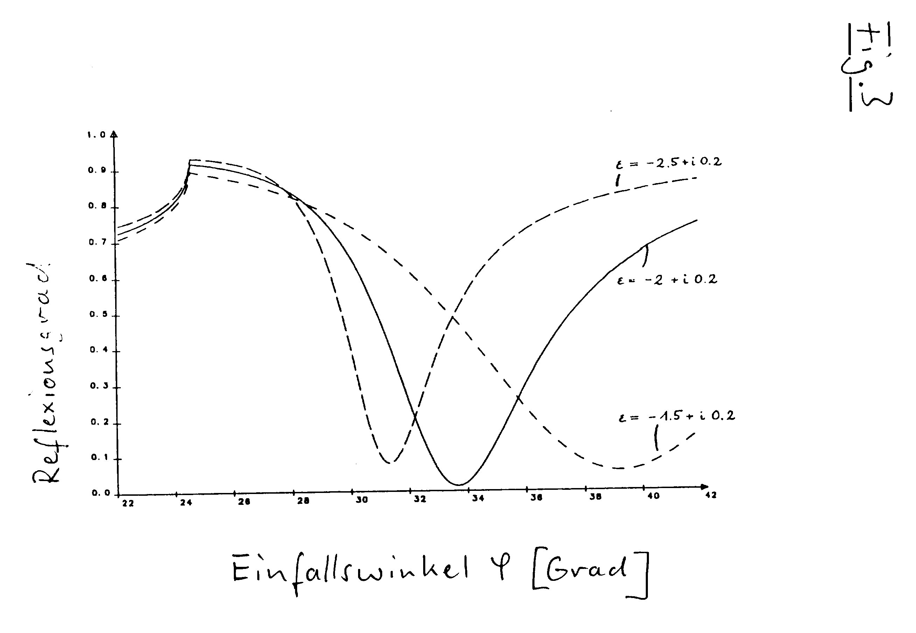

Im Infrarot-Spektralbereich zeigen einige Dielektrika einen Bereich ("Reststrahlenbande"), in dem Re ε < -1, |Re ε| jedoch wesentlich kleiner als bei Metallen ist. Beispiel solcher Materialien, die für den betrachteten Wellenlängerbereich von 1 -20 µm verwendet werden können, sind Quarz, Al₂O₃, BeO oder AIN. Fig. 3 zeigt den berechneten winkelabhängigen Verlauf der ATR für ein ZnSe-Prisma (ε = 5,78) und einer 1,2 µm dicken aktiven Schicht, für die verschiedene typische Werte der dielektrischen Funktion bei einer Wellenlänge von 10,6 µm angenommen sind. Die Winkelbreite der Plasmon-Resonanz (der Winkelbereich, in dem der Reflektion stark absinkt) ist dabei größer als vier Grad.

Für die Dispersionsschicht werden thermorefraktive Materialien benötigt, die eine starke Temperaturabhängigkeit des Brechungsindex im betrachteten Wellenlängenbereich, hier zwischen 1 - 20 µm aufweisen. Dafür können Materialien eingesetzt werden, die einen starken Temperaturgang des Brechungsindex aufweisen. Besonders geeignet aber sind Materialien, die aufgrund einer Phasenumwandlung bei einer geeigneten Temperatur eine sprunghafte Änderung im Brechungsindex aufweisen, wie z. B. Flüssigkristalle, Vanadiumoxid VO₃. Dabei kann durch die Wahl eines Materials mit entsprechender Umwandlungstemperatur die Einsatzschwelle des Leistungsbegrenzers an die Toleranzgrenze eines zu schützenden IR-Detektors angepaßt werden.

Die Wirkungsweise der erfindungsgemäßen Vorrichtung wird im folgenden anhand einer konkreten Ausführungsform noch einmal im Detail erläutert. Die betrachtete Vorrichtung besteht aus einer Anordnung, wie in Fig. 2a gezeigt. Das Prisma besteht aus KBr mit einer Dielektrizitätskonstante ε von 2,33, die aktive Schicht aus einem Material, in dessen Reststrahlenbande ε = -4 + i 0,2 (komplexe Dielektrizitätskonstante ε, imaginäre Einheit i) beträgt (ε-Werte jeweils für eine Wellenlänge λ = 10,6 µm ). Als Dispersionschicht wird VO₂ verwendet, das nahe 67° C einen Halbleiter-Metall-Phasenübergang zeigt, der z. B. bei λ = 3,4 µm eine Änderung der Dielektrizitätskonstante von ε = 7,62 + i 0,11 (Halbleiter) zu ε = -13,6 + i 21,1 (Metall) bewirkt.
Die Dicke der aktiven Schicht beträgt 0,6 µm, die Dicke der Dispersionsschicht 60 nm.

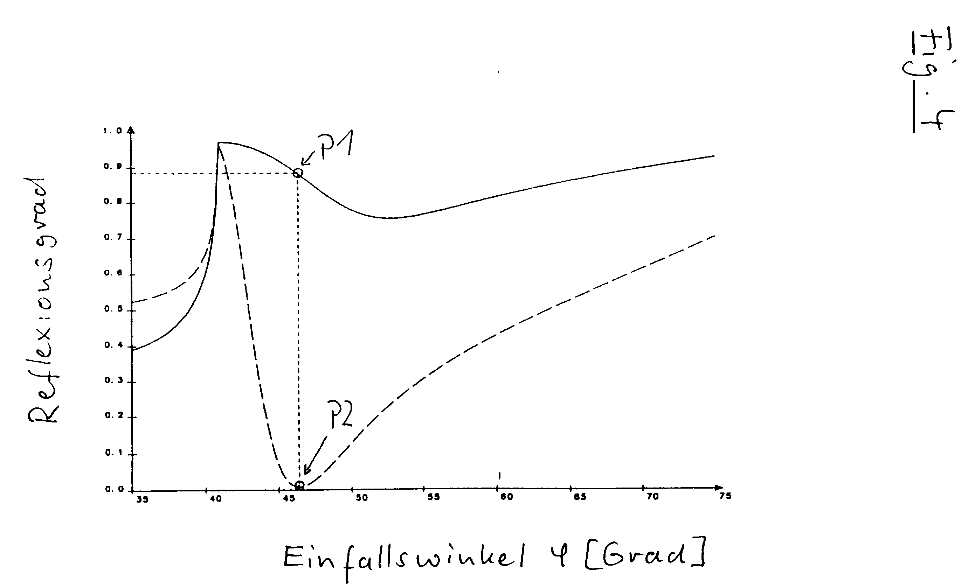

Die Fig. 4 zeigt das Reflexionsvermögen der Ablenkeinheit in Abhängigkeit von Einfallswinkel ϕ der einfallenden Strahlung aus dem betreffenden Wellenlängenbereich.

Die durchgezogene Linie stellt dabei das Reflexionsvermögen bei kleinen Lichtintensitäten dar, durch die die Oberflächenschichten der Vorrichtung gar nicht oder nur schwach durch die einfallende Strahlung erwärmt werden und folglich das VO₂ sich im halbleitenden Zustand befindet. Die Plasmonenresonanz ist nur schwach ausgeprägt, die maximale Absorption (minimale Reflektion) liegt bei einem Einfallswinkel ϕ von etwa 52 Grad.

Die gestrichelte Linie zeigt das Reflexionsvermögen bei Einfall von starker Lichtintensität, durch die die Oberflächenschichten des Leistungsbegrenzers stark erwärmt werden. Die Erwärmung hat eine Phasenumwandlung des VO₂ in den metallischen Zustand mit einer entsprechenden Änderung der Dielektrizitätskonstante zur Folge. Die Plasmonenresonanz ist sehr stark ausgeprägt und der Reflexionsgrad liegt bei einem Einfallswinkel ϕ von 46 ° annähernd bei Null, d.h. sämtliche eingestrahlte Energie wird durch die Erzeugung von Oberflächenplasmonen absorbiert.

Wählt man einen festen Einfallswinkel ϕ von 46°, so beträgt das Reflexionsvermögen beim Einfall schwacher Lichtintensität (Punkt P1) ) etwa 88 %. Bei hohen Lichtintensitäten dagegen erhält man ein annähernd verschwindendes Reflexionsvermögen (Punkt P2).

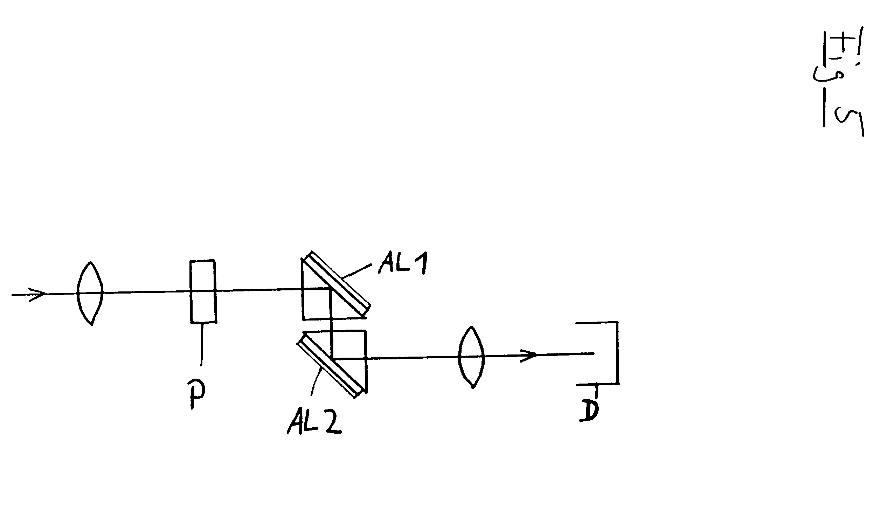

In Fig. 5 ist ein Strahlengang dargestellt, in dem zwei optische Leistungsbegrenzer AL1,AL2 der mit Hilfe von Fig. 4 beschriebenen Art zum Schutz eines IR-Detektors gegen den Einfall hoher Strahlungsintensitäten verwendet werden.

Die einfallende Strahlung passiert einen Polarisator P, wird im weiteren an den beiden identischen Leistungsbegrenzern AL1,AL2 abgelenkt und erreicht danach erst den IR-Detektor D. Der Polarisator P läßt nur solche Strahlung durch, deren Vektor der elektrischen Feldstärke parallel zur Einfallsebene bezüglich der Reflektion an den beiden nachfolgenden Leistungsbegrenzern AL1,AL2 schwingt. Die Ablenkeinheiten AL1,AL2 sind gegenüber dem einfallenden Strahl so angeordnet, daß bei der Ablenkung an jedem der beiden Ablenkeinheiten AL1,AL2 der Einfallswinkel ϕ jeweils 46° beträgt. Wie in der Beschreibung zu Fig. 4 erläutert, ist bei diesem Winkel ϕ die Absorption beim Einfall intensiver Strahlung, z. B. CO₂ - Laserstrahlung, am stärksten, während weniger intensive Strahlung fast vollständig reflektiert wird, und somit zum IR-Detektor gelangt.

## Patentansprüche

1. Optischer Leistungsbegrenzer (AL1, AL2), dessen Durchlässigkeit innerhalb des Wellenlängenbereichs von 1 bis 20 µm abhängig ist von der Intensität einfallender Strahlung, **dadurch gekennzeichnet,** daß der Leistungsbegrenzer (AL1, AL2) ein Prisma mit mindestens einer ebenen Grenzfläche aufweist, auf der zwei übereinanderliegende Schichten (AS,DS) aufgebracht sind, wobei eine Schicht (AS) aus einem aktiven Material besteht, dessen Realteil der Dielektrizitätskonstante im Wellenlängenbereich von 1 bis 20 µm negativ ist, und die andere Schicht aus einem dispersiven Material besteht, dessen Brechungsindex im Wellenlängenbereich von 1 bis 20 µm im Vergleich zum aktiven material stark temperaturabhängig ist, wobei die Dispersionsschicht (DS) beim Einfall hoher Strahlungsintensität durch Restabsorption erwärmt wird, was zu einer Veränderung der Resonanzeigenschaften der Oberflächenplasmonen an der aktiven Schicht (AS) führt, und zwar derart, daß eine Abschwächung des p-polarisierten Anteils der einfallenden Strahlung hervorgerufen wird.

2. Optischer Leistungsbegrenzer nach Anspruch 1, **dadurch gekennzeichnet,** daß die aktive Schicht (**A S**) auf die ebene Grenzfläche aufgebracht ist und auf die aktive Schicht (**A S**) die Dispersionsschicht (**D S**) aufgebracht ist.

3. Optischer Leistungsbegrenzer nach Anspruch 2, **dadurch gekennzeichnet,** daß die Schichtdicke der aktiven Schicht (**A S**) im Bereich von 500 nm bis 1500 nm und die Schichtdicke der Dispersionsschicht (**D S**) im Bereich von 50-2000 nm liegt.

4. Optischer Leistungsbegrenzer nach Anspruch 1, **dadurch gekennzeichnet,** daß die Dispersionsschicht (**D S**) auf die ebene Grenzfläche aufgebracht ist und auf die Dispersionsschicht (**D S**) die aktive Schicht (**A S**) aufgebracht ist.

5. Optischer Leistungsbegrenzer nach Anspruch 4, **dadurch gekennzeichnet,** daß die Schichtdicke der Dispersionsschicht (**D S**) im Bereich von 1000 - 2000 nm liegt.

6. Optischer Leistungsbegrenzer nach einem der vorangehenden Ansprüche, **dadurch gekennzeichnet,** daß das Material für die aktive Schicht (**A S**) ein Cermet-Material wie Cu in KBr oder in Ge oder ein hochdotierter Halbleiter wie Si, Ge, In₂O₃ : SnO₂ oder ein Dielektrikum wie Quarz, Al₂O₃, BeO, AIN ist.

7. Optischer Leistungsbegrenzer nach einem der vorangehenden Ansprüche, **dadurch gekennzeichnet,** daß das Material für die Dispersionsschicht (**D S**) ein Flüssigkristall oder ein Stoff mit einem Halbleiter-Metall-Übergang wie VO₂ ist.

8. Optischer Leistungsbegrenzer nach Anspruch 1 und 2, **dadurch gekennzeichnet,** daß
- das Material für das Prisma (**P**) KBr ist
- das Material für die aktive Schicht (**A S**) Al₂O₃ ist und die Schichtdicke 0,6 µm beträgt
- das Material für die Dispersionsschicht (**D S**) VO₂ ist und die Schichtdicke 60 nm beträgt.

9. Optischer Leistungsbegrenzer nach einem der vorangehenden Ansprüche, **dadurch gekennzeichnet,** daß das Prisma (**P**) aus einem Material besteht, dessen Absorptionsvermögen mit steigender Temperatur stark zunimmt.

10. Verwendung eines optischen Leistungsbegrenzers nach mindestens einem der vorangehenden Ansprüche zum Schutz von IR-Detektoren.

11. Verwendung eines optischen Leistungsbegrenzers nach Anspruch 10 zum Schutz von IR-Detektoren in Wärmebildgeräten.

## Claims

1. Optical energy limiter (AL1, AL2) the transmissivity of which is dependent upon the intensity of incident radiation within the wavelength range of from 1 to 20 µm, characterized in that the energy limiter (AL1, AL2) has a prism with at least one flat boundary surface to which two superimposed coatings (AS, DS) are applied, one coating (AS) being composed of an active material of which the real component of the dielectric constant is negative in the wavelength range of from 1 to 20 µm, and the other coating being composed of a dispersive material the refractive index of which is greatly temperature-dependent in comparison with the active material in the wavelength range of from 1 to 20 µm, the dispersion coating (DS) being heated by residual absorption upon the incidence of high-intensity radiation, leading to a change in the resonance characteristics of the surface plasmons on the active coating (AS) such that a reduction of the p-polarized portion of the incident radiation is brought about.

2. Optical energy limiter according to Claim 1, characterized in that the active coating (AS) is applied to the flat boundary surface and the dispersion coating (DS) is applied to the active coating (AS).

3. Optical energy limiter according to Claim 2, characterized in that the thickness of the active coating (AS) lies in the range of from 500 nm to 1500 nm and the thickness of the dispersion coating (DS) lies in the range of from 50 - 2000 nm.

4. Optical energy limiter according to Claim 1, characterized in that the dispersion coating (DS) is applied to the flat boundary surface and the active coating (AS) is applied to the dispersion coating (DS).

5. Optical energy limiter according to Claim 4, characterized in that the thickness of the dispersion coating (DS) lies in the range of from 1000 - 2000 nm.

6. Optical energy limiter according to any one of the preceding claims, characterized in that the material for the active coating (AS) is a cermet material such as Cu in KBr or in Ge, or a highly doped semiconductor such as Si, Ge, In₂O₃ : SnO₂, or a dielectric such as quartz, Al₂O₃, BeO, AlN.

7. Optical energy limiter according to any one of the preceding claims, characterized in that the material for the dispersion coating (DS) is a liquid crystal or a material with a semiconductor-metal transition, such as VO₂.

8. Optical energy limiter according to Claims 1 and 2, characterized in that
- the material for the prism (P) is KBr,
- the material for the active coating (AS) is Al₂O₃ and the coating thickness is 0.6 µm,
- the material for the dispersion coating (DS) is VO₂ and the coating thickness is 60 nm.

9. Optical energy limiter according to any one of the preceding claims, characterized in that the prism (P) is composed of a material, the absorptivity of which increases greatly with rising temperature.

10. Use of an optical energy limiter according to at least one of the preceding claims for the protection of IR detectors.

11. Use of an optical energy limiter according to Claim 10 for the protection of IR detectors in thermal imaging equipment.The invention relates to an optical energy limiter according to the preamble to Claim 1.

## Revendications

1. Limiteur optique de puissance (AL1, AL2) dont la transmission dépend, dans une gamme de longueur d'ondes de 1 à 20 µm, de l'intensité du rayonnement incident, caractérisé en ce que le limiteur de puissance (AL1, AL2) présente un prisme comportant au moins une surface limite plane sur laquelle sont appliquées deux couches (AS, DS) l'une au-dessus de l'autre, une couche (AS) se composant d'une matière active, dont la composante réelle de la constante diélectrique est négative dans la gamme d'ondes comprise entre 1 et 20 µm, et l'autre couche se composant d'une matière dispersive dont l'indice de réfraction dépend, comparé à la matière active, fortement de la température dans la gamme d'ondes comprise entre 1 à 20 µm, la couche de dispersion (DS) étant chauffée par absorption résiduelle en présence d'une incidence d'une intensité élevée de rayonnement, ce qui a pour conséquence, au niveau de la couche active (AS), une modification des propriétés de résonance des plasmons de surface et, ce, de manière à provoquer un affaiblissement de la partie de rayonnement incident à polarisation du type p.

2. Limiteur optique de puissance selon la revendication 1, caractérisé en ce que la couche active (AS) est appliquée sur la surface limite plane et la couche de dispersion (DS) est appliquée sur la couche active (AS).

3. Limiteur optique de puissance selon la revendication 2, caractérisé en ce que l'épaisseur de la couche active (AS) est comprise entre 500 nm et 1500 nm et l'épaisseur de la couche de dispersion (DS) est comprise entre 50 et 2000 nm.

4. Limiteur optique de puissance selon la revendication 1, caractérisé en ce que la couche de dispersion (DS) est appliquée sur la surface limite plane et en ce que la couche active (AS) est appliquée sur la couche de dispersion (DS).

5. Limiteur optique de puissance selon la revendication 4, caractérisé en ce que l'épaisseur de la couche de dispersion (DS) est comprise entre 1000 et 2000 nm.

6. Limiteur optique de puissance selon l'une des revendications précédentes, caractérisé en ce que la matière pour la couche active (AS) est une matière Cermet telle que Cu dans KBr ou dans Ge ou un semi-conducteur hautement dopé tel que Si, Ge, In₂O₃ : SnO2 ou un diélectrique tel que le quartz, Al₂O₃, BeO, AIN.

7. Limiteur optique de puissance selon l'une des revendications précédentes, caractérisé en ce que la matière pour la couche de dispersion (DS) est un cristal liquide ou une substance présentant une transition métal semi-conducteur comme VO₂

8. Limiteur optique de puissance selon les revendications 1 et 2, caractérisé en ce que
- la matière pour le prisme (P) est KBr,
- la matière pour la couche active (AS) est Al₂O₃ et l'épaisseur de couche est de 0,6 µm.
- la matière pour la couche de dispersion (DS) est VO₂ et l'épaisseur de la couche est de 60 nm.

9. Limiteur optique de puissance selon l'une des revendications précédentes, caractérisé en ce que le prisme (P) se compose d'une matière dont le pouvoir d'absorption augmente fortement avec l'accroissement de la température.

10. Utilisation d'un limiteur optique de puissance selon au moins l'une des revendications précédentes, pour la protection de détecteurs IR.

11. Utilisation d'un limiteur optique de puissance selon la revendication 10, pour la protection de détecteurs IR dans des appareils d'imagerie thermique.
